# EUROPÄISCHE PATENTSCHRIFT

(11) **EP 4 114 607 B1**
(45) Veröffentlichungstag und Bekanntmachung des Hinweises auf die Patenterteilung: **01.04.2026**
(21) Anmeldenummer: 21704775.2
(22) Anmeldetag: 11.02.2021
(51) Int. Cl.: B23K 26/08, B23K 26/38, B23K 26/70, B23K 37/02, B23K 37/047, B21D 45/00

(54) **LASERBEARBEITUNGSMASCHINE ZUM BEARBEITEN VON WERKSTÜCKEN**
LASER MACHINE TOOL FOR MACHINING WORKPIECES
MACHINE-OUTIL À LASER POUR USINAGE DE PIÈCES DE FABRICATION

(30) Priorität: 06.03.2020 DE 102020106142
(43) Veröffentlichungstag der Anmeldung: 11.01.2023
(73) Patentinhaber: TRUMPF Werkzeugmaschinen SE + Co. KG, 71254 Ditzingen (DE)
(72) Erfinder: SCHOPF, Ralf, 71254 Ditzingen (DE)
(74) Vertreter: Trumpf Patentabteilung
(86) Internationale Anmeldenummer: PCT/EP2021/053307
(87) Internationale Veröffentlichungsnummer: WO 2021/175556

(56) Entgegenhaltungen:
- EP-A1- 2 548 691
- EP-B1- 2 548 691
- DE-A1- 102016 120 151

## Beschreibung

Die Erfindung betrifft eine Laserbearbeitungsmaschine gemäß dem Oberbegriff von Anspruch 1 (siehe, zum Beispiel DE 10 2016 120151 A1).

Derartige Laserbearbeitungsmaschinen dienen der laserschneidenden Bearbeitung von Werkstücken, insbesondere Rohren, mittels einer Laserbearbeitungsvorrichtung der Laserbearbeitungsmaschine. Das Laserschneiden wird in einem Arbeitsraum der Laserbearbeitungsmaschine durchgeführt, der mit einer Einhausung versehen ist. Die Einhausung dient der Abschirmung der Umgebung der Laserbearbeitungsmaschine gegen Laserstrahlung, die während eines Bearbeitungsprozesses im Inneren des Arbeitsraums an einer Bearbeitungsstelle an dem Werkstück emittiert wird.

Durch eine Einlassöffnung in der Einhausung wird ein zu bearbeitendes Werkstück in einer axialen Werkstück-Zuführrichtung in das Innere des Arbeitsraums vorgeschoben. Bearbeitete Werkstücke, die durch laserschneidende Bearbeitung im Innern des Arbeitsraums erzeugt worden sind, werden in einem Entladebereich in einer Querrichtung zu der Werkstück-Zuführrichtung verlaufenden Ausschleusrichtung aus dem Arbeitsraum ausgeschleust.

Nach einem finalen Trennschnitt gelangen die bearbeiteten Werkstücke dabei zunächst unter Schwerkraftwirkung auf eine unterhalb der Bearbeitungsstelle angeordnete Ausschleusschräge einer Ausschleusstation in dem Entladebereich. Über die Ausschleusschräge verlassen die bearbeiteten Werkstücke den Arbeitsraum durch eine in der Ausschleusrichtung gelegene Teileablage der Ausschleusstation.

Die DE 20 2017 107 190 U1 und die DE 10 2016 204 161 B4 betreffen eine Laserbearbeitungsmaschine, welche einen Arbeitsraum und einen Entladebereich aufweisen. Ferner ist aus der DE 10 2016 120 151 A1 eine Technik zum Ausschleusen von lasergeschnittenen oder gestanzten Werkstückteilen aus dem Bearbeitungsbereich einer Werkzeugmaschine mittels eines Klappmechanismus bekannt. Aufgabe der Erfindung ist es, eine Laserbearbeitungsmaschine bereitzustellen, bei der ein schnelles, funktionssicheres und einfaches Entladen von bearbeiteten Werkstücken in der Ausschleusstation ermöglicht wird.

Die Aufgabe wird gelöst durch eine Laserbearbeitungsmaschine gemäß Anspruch 1. Vorgeschlagen wird dementsprechend eine Laserbearbeitungsmaschine zum Bearbeiten von Werkstücken, wobei die Laserbearbeitungsmaschine insbesondere vorsieht, dass die Teileablage eine Teileablagefläche mit einer Teileöffnung für die bearbeiteten Werkstücke und ein Verschlusselement aufweist, wobei das Verschlusselement und die Teileöffnung dazu eingerichtet sind, dass die Teileöffnung mittels des Verschlusselements verschlossen und geöffnet wird und dass durch die geöffnete Teileöffnung Werkstücke ausschleusbar sind.

Die vorgeschlagene Laserbearbeitungsmaschine ermöglicht mittels der Teileöffnung in der Teileablagefläche somit ein schnelles, funktionssicheres und einfaches Entladen von bearbeiteten Werkstücken in der Ausschleusstation. Wenn die Teileöffnung nicht mehr zum Ausschleusen von bearbeiteten Werkstücken durch die Teileöffnung genutzt werden soll, kann sie mittels des Verschlusselements einfach verschlossen werden. Anschließend kann die mittels des Verschlusselements verschlossene Teileöffnung einfach geöffnet werden, wenn die bearbeiteten Werkstücke wieder durch die Teileöffnung ausgeschleust werden sollen. Wenn die Teileöffnung verschlossen ist, können bearbeitete Werkstücke weiter mittels der Ausschleusstation entladen werden, indem sie auf der Teileablage, also auf der geschlossenen Teileablagefläche, gesammelt werden. Dadurch wird eine Teileablage bereitgestellt, in der die bearbeiteten Werkstücke wahlweise durch die Teileöffnung ausgeschleust werden können oder auf der Teileablage gesammelt werden können. Dabei kann die Teileöffnung eine kleinere Fläche und/oder eine kleinere Länge in Werkstück-Zuführrichtung als die Teileablagefläche aufweisen. Dadurch können kleinere bzw. kürzere bearbeitete Werkstücke durch die Teileöffnung ausgeschleust werden und größere bzw. längere Werkstücke auf der Teileablagefläche gesammelt werden.

Der Arbeitsraum kann dabei eine Einlassöffnung zum Einlassen der zu bearbeitenden Werkstücke und eine den Arbeitsraum umgebenden Einhausung aufweisen.

Ferner kann ein Beladebereich zum Beladen des Arbeitsraums mit Werkstücken vorgesehen sein, wobei der Beladebereich in einer Werkstück-Zuführrichtung des zu bearbeitenden Werkstücks der Einlassöffnung des Arbeitsraums vorgelagert ist.

Das Verschlusselement als Klappe und vorzugsweise als Schieber ausgebildet sein. Der Schieber ist insbesondere derart verschiebbar ausgebildet, dass er die Teileöffnung verschließen und öffnen kann. Insbesondere ist der Schieber dabei in Ausschleusrichtung verschiebbar ausgebildet. So wird der Schieber über die Teileöffnung geschoben, um die Teileöffnung zu verschließen, und von der Teileöffnung weg verschoben, um die Teileöffnung zu öffnen.

Insbesondere kann der Entladebereich in der Werkstück-Zuführrichtung betrachtet einen Abschnitt, der sich in den Arbeitsraum erstreckt, sowie vorzugsweise einen weiteren Abschnitt, der dem Arbeitsraum nachgelagert, aufweisen. Dies kann bedeuten, dass sich der Entladebereich abschnittweise innerhalb der Umhausung des Arbeitsraums befindet und zusätzlich eine der Umhausung des Arbeitsraums in Werkstück-Zuführrichtung nachgelagerte weitere Umhausung umfassen kann.

Die Werkstücke können insbesondere Rohre sein. Der Querschnitt der Rohre oder Rohrstücke kann beliebig sein, beispielsweise rund, dreieckig, viereckig oder dergleichen sein.

Die Laserbearbeitungsmaschine kann ferner Werkstückunterstützungen in dem Beladebereich aufweisen. Vor Beginn der Bearbeitung mit der Laserbearbeitungsmaschine kann ein Werkstück mit einer in Querrichtung zur Längsrichtung des Werkstücks ausgeführten Beladebewegung auf den Werkstückunterstützungen abgelegt werden. Die Werkstückunterstützungen in dem Beladebereich können an einem Maschinenbett heb- und senkbar geführt sein. Die Ablage bzw. das Abladen der Werkstücke auf den Werkstückunterstützungen kann dabei manuell von einer Bedienerseite des Maschinenbetts her oder mittels einer Beladevorrichtung erfolgen, die an der von der Bedienerseite abliegenden Rückseite des Maschinenbetts angeordnet sein kann. Das auf den Werkstückunterstützungen abgelegte Werkstück streckt sich mit seiner Längsrichtung in einer Vorschubrichtung bzw. Werkstück-Zuführrichtung, in welcher das von den Werkstückunterstützungen unterfangene Werkstück dem, insbesondere bis auf die Einlassöffnung und die Auslassöffnung vollständig in der Einhausung eingehausten, Arbeitsraum der Laserbearbeitungsmaschine vorgelagert ist.

Ferner kann die Laserbearbeitungsmaschine eine Vorschubeinheit aufweisen. An seinem von dem Arbeitsraum der Laserbearbeitungsmaschine abliegenden Längsende wird das auf den Werkstückunterstützungen abgelegte Werkstück von der Vorschubeinheit erfasst, die dazu ausgebildet sein kann, längs des Maschinenbetts in der Werkstück-Zuführrichtung und in Gegenrichtung zu verfahren. Durch eine entsprechende Verfahrbewegung der Vorschubeinheit wird das an dieser fixierte Werkstück durch die Einlassöffnung der Einhausung des Arbeitsraums der Maschine in den Arbeitsraum eingeführt. An dem in den Arbeitsraum der Maschine eingeführten Teil des Werkstücks wird dann mittels der in dem Arbeitsraum angeordneten Laserbearbeitungsvorrichtung die gewünschte Bearbeitung durchgeführt.

Die Ausschleusstation kann eine weitere Einhausung und/oder Ausschleusschräge aufweisen. Durch die Ausschleusstation wird dann das bearbeitete Werkstück in Querrichtung zu der Werkstück-Zuführrichtung mittels der Ausschleusschräge zu der Teileablage ausgeschleust. Aus der Teileablage kann das bearbeitete und ausgeschleuste Werkstück sodann entnommen werden.

Es kann vorgesehen sein, dass die Ausschleusstation einen Teilebehälter aufweist, der unterhalb der Teileöffnung anordenbar oder angeordnet ist. In dem Teilebehälter können so die durch die Teileöffnung ausgeschleusten bzw. fallenden bearbeiteten Werkstücke gesammelt werden. Wenn der Teilebehälter eine vorbestimmte Anzahl von bearbeiteten Werkstücke einer bestimmten Größe bzw. Länge aufweist oder voll ist, kann der Teilebehälter einfach durch einen leeren Teilebehälter ausgetauscht werden, in den hinein die bearbeiteten Werkstücke weiter ausgeschleust werden können. Der Teilebehälter kann beispielsweise Rollen zum Transportieren aufweisen oder auf Schienen geführt sein.

Ferner kann vorgesehen sein, dass das Verschlusselement und insbesondere der Schieber dazu eingerichtet ist, die Teileöffnung flächenbündig zu verschließen. Dies bedeutet, dass bei verschlossener Teileöffnung im Wesentlichen kein Spalt zwischen der Teileöffnung und dem Schieber besteht. Dazu können das Verschlusselement und insbesondere der Schieber und die Teileöffnung zueinander korrespondierende, insbesondere gleiche, Konturen und/oder Abmessungen aufweisen. Dadurch wird ein optimales Bewegen der bearbeiteten Werkstücke auf der Teileablagefläche ermöglicht, ohne dass sich die bearbeiteten Werkstücke in einem Spalt zwischen Schieber und Teileöffnung verkanten könnten.

Auch kann vorgesehen sein, dass die Teileöffnung und/oder das Verschlusselement und insbesondere der Schieber in Ausschleusrichtung zueinander verlaufende Kanten aufweist. Dabei verlaufen die Kanten von der Teileöffnung und/oder dem Schieber schräg gegenüber der Ausschleusrichtung. Dadurch wird ein Verkanten bzw. Verklemmen beim Verschieben des Schiebers vermieden, was sonst aufgrund von in der Teileablage vorhandenen Spänen oder Butzen vorkommen könnte.

Weiterhin kann vorgesehen sein, dass die Teileöffnung und/oder das Verschlusselement und insbesondere der Schieber trapezförmig ausgebildet sind. Zueinander verlaufende Kanten können dabei die schrägen Seiten der Trapezform der Teileöffnung und/oder des Schiebers sein. Dies ermöglicht ein spaltfreies Schließen der Teileöffnung mittels des Schiebers. Natürlich kann das Verschlusselement auch eine andere Geometrie aufweisen und insbesondere in Draufsicht quadratisch oder rechteckig ausgebildet sein und/oder Rundungen aufweisen.

Erfindungsgemäß sind die Teileöffnung und das Verschlusselement und insbesondere der Schieber in einem Kurzteilabschnitt der Teileablage angeordnet und die Teileablage weist einen Langteilabschnitt mit einer zusätzlichen Teileablagefläche auf, wobei der Langteilabschnitt den Kurzteilabschnitt aufweist. Dadurch können in dem Kurzteilabschnitt kurze bearbeitete Werkstücke und in dem Langteilabschnitt lange bearbeitete Werkstücke in derselben Ausschleusstation ausgeschleust werden. In dem Kurzteilabschnitt erfolgt dies dabei auf besonders einfache und schnelle Weise mittels der Teileöffnung. Die Teileöffnung ist dabei verschließbar, um die großen bzw. langen bearbeiteten Werkstücke ausschleusen zu können und ein Verklemmen oder Verkanten von langen bearbeiteten Werkstücken in einer geöffneten Teileöffnung zu verhindern. Insbesondere kann der Langteilabschnitt derart ausgebildet sein, dass er den Kurzteilabschnitt in Werkstück-Zuführrichtung verlängert.

Dabei ist ferner vorgesehen, dass ein Teil des Langteilabschnitts als eine Teileschublade ausgebildet ist, die in Ausschleusrichtung ein- und ausfahrbar ist.

Hierbei kann vorgesehen sein, dass die zusätzliche Teileablagefläche im eingefahrenen Zustand der Teileschublade entgegen der Ausschleusrichtung eingefahren ist und die Teileablagefläche und die zusätzliche Teileablagefläche im ausgefahrenen Zustand der Teileschublade eine gemeinsame Teileablagefläche ausbilden. Durch das Einfahren entgegen der Ausschleusrichtung wird ein einfacher Zugang zu der Ausschleusstation, insbesondere zu dem Kurzteilabschnitt in entgegengesetzter Richtung der Werkstück-Zuführrichtung, ermöglicht. Dies erleichtert eine Störungsbehebung, Umrüstung, Wartung, Reinigung und dergleichen der Ausschleusstation. Ferner kann in dem ausgefahrenen Zustand die sich aus der Teileablagefläche und der zusätzlichen Teileablagefläche bildende gesamte gemeinsame Teileablagefläche zum Ausschleusen genutzt werden, wodurch besonders große bzw. lange bearbeitete Werkstücke ausgeschleust werden können.

Darüber hinaus kann vorgesehen sein, dass die Teileschublade einen in Ausschleusrichtung an einem Ende der zusätzlichen Teileablagefläche angeordneten Teileanschlag aufweist. Die bearbeiteten Werkstücke können beim Ausschleusen in Ausschleusrichtung von dem Teileanschlag aufgehalten werden, wodurch dieser ein funktionssicheres Sammeln von bearbeiteten Werkstücken in der Teileablage ermöglicht.

Zudem kann vorgesehen sein, dass die Teileschublade in Ausschleusrichtung zueinander verlaufende Kanten aufweist. Dabei verlaufen die Kanten von der Teileschublage schräg gegenüber der Ausschleusrichtung. Dadurch wird ein Verklemmen bzw. Verkannten der Teileschublade beim Ein- und Ausfahren vermieden.

Ferner kann vorgesehen sein, dass die Teileschublade und/oder die zusätzliche Teileablagefläche trapezförmig ausgebildet ist. Die zueinander verlaufenden Kanten können dabei die schrägen Seiten der Trapezform der Teileschublade sein. Natürlich kann Teileschublade und/oder die zusätzliche Teileablagefläche auch eine andere Geometrie aufweisen und insbesondere in Draufsicht quadratisch oder rechteckig ausgebildet sein und/oder Rundungen aufweisen.

Schließlich kann vorgesehen sein, dass die zusätzliche Teileablagefläche in Werkstück-Zuführrichtung länger oder kürzer als die Teileablagefläche ist. Beispielsweise kann die Teileablagefläche in Werkstück-Zuführrichtung eine Länge von 1 m aufweisen und die zusätzliche Teileablagefläche kann in Werkstück-Zuführrichtung eine Länge von 2 m aufweisen. So können mittels der Teileablagefläche bei geöffneter Teileöffnung bis zu 1 m lange bearbeitete Werkstücke ausgeschleust werden.

Weitere Einzelheiten und vorteilhafte Ausgestaltungen der Erfindung sind der nachfolgenden Beschreibung zu entnehmen, anhand derer Ausführungsbeispiele der Erfindung näher beschrieben und erläutert werden.

Es zeigen:
- Figur 1: eine perspektivische Ansicht auf eine Laserbearbeitungsmaschine gemäß dem Stand der Technik,
- Figur 2: eine perspektivische Ansicht auf eine Ausschleusstation einer Laserbearbeitungsmaschine gemäß einem Ausführungsbeispiel der Erfindung mit ausgefahrener Teileschublade,
- Figur 3: die perspektivische Ansicht der Ausschleusstation aus der Figur 2 mit eingefahrener Teileschublade,
- Figur 4: eine Draufsicht auf die Teileablage der Ausschleusstation aus Figur 2 und
- Figur 5: eine Schrägschnittansicht auf die Ausschleusstation aus Figur 2 und 3 bei verschlossener Teileöffnung, und
- Figur 6: die Schrägschnittansicht auf die Ausschleusstation aus Figur 5 bei geöffneter Teileöffnung.

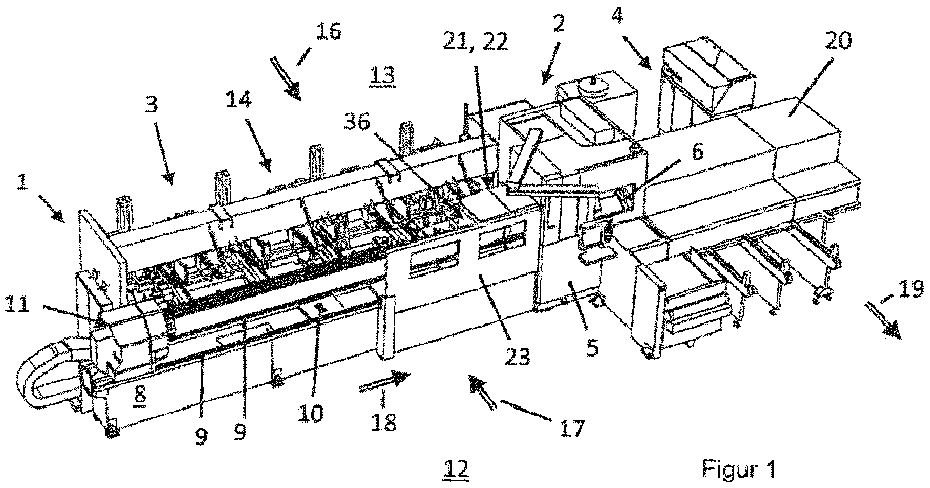

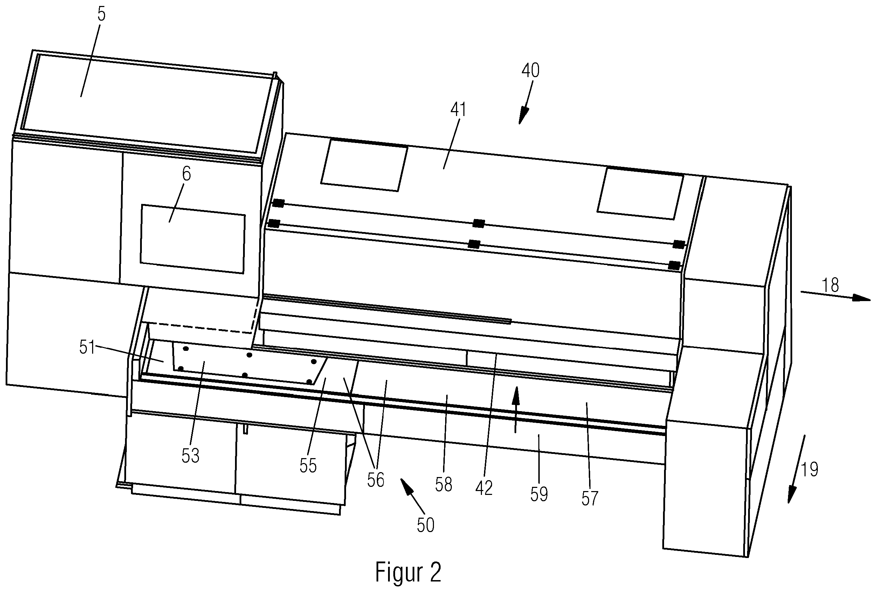

Ausweislich der Figur 1 weist eine Laserbearbeitungsmaschine 1 für die Rohrbearbeitung einen Arbeitsbereich 2, einen Beladebereich 3 sowie einen Entladebereich 4 auf. Die gezeigte Laserbearbeitungsmaschine 1 entspricht der aus DE 20 2017 107 190 U1. Die gezeigte Laserbearbeitungsmaschine 1 unterscheidet sich von einer beispielhaften Laserbearbeitungsmaschine 1 gemäß der Erfindung aus den Figuren 2 bis 6 in ihrem Entladebereich 4. Folglich kann ein Ausführungsbeispiel einer erfindungsgemäßen Laserbearbeitungsmaschine 1 die Merkmale der Laserbearbeitungsmaschine 1 gemäß Figur 1 mit Ausnahme der Merkmale des in Figur 1 gezeigten Entladebereichs 4 aufweisen.

In dem Arbeitsbereich 2 der Laserbearbeitungsmaschine 1 befindet sich ein mit einer Einhausung 5 versehener Arbeitsraum 6. Die Einhausung 5 des Arbeitsraums 6 ist bis auf eine in dieser Ansicht durch einen Strahlschutztunnel 20 verdeckte und somit nicht gezeigte Einlassöffnung in der zu dem Beladebereich 3 hin liegenden Wand der Einhausung 5 und bis auf eine ebenfalls verdeckte Auslassöffnung in der zu dem Entladebereich 4 hin liegenden Wand der Einhausung 5 geschlossen. In dem Arbeitsraum 6 im Inneren der Einhausung 5 ist eine nicht erkennbare Laserbearbeitungsvorrichtung, in dem dargestellten Beispielsfall eine Laserschneidvorrichtung für die schneidende Bearbeitung von Werkstücken, insbesondere Rohren, angeordnet.

In dem Beladebereich 3 der Laserbearbeitungsmaschine 1 ist als Tragstruktur ein Maschinenbett 8 angeordnet, dass arbeitsraumseitig bis in die Einhausung 5 reicht. An der Oberseite des Maschinenbetts 8 sind Führungsschienen 9 montiert, die längs des Maschinenbetts 8 verlaufen. Außerdem sind an dem Maschinenbett 8 Werkstückunterstützungen 10 herkömmlicher Bauart in vertikaler Richtung heb- und senkbar geführt.

Eine Werkstück-Vorschubeinheit in Form einer Vorschubeinheit 11 ist längs des Maschinenbetts 8 verfahrbar. In bekannter Weise ist die Vorschubeinheit 11 arbeitsraumseitig mit einem Spannfutter zur Fixierung eines in dem Arbeitsraum 6 zu bearbeitenden Rohres versehen. Das Spannfutter ist um die Werkstücklängsachse drehbar.

Bei ihren Bewegungen längs des Maschinenbetts 8 ist die Vorschubeinheit 11 an den Führungsschienen 9 geführt. Als motorischer Antrieb für die Vorschubeinheit 11 ist ein Zahnstangenantrieb herkömmlicher Bauart vorgesehen mit einer an dem Maschinenbett 8 parallel zu den Führungsschienen 9 verlaufenden und der Einfachheit halber nicht dargestellten Zahnstange sowie mit einem an der Vorschubeinheit 11 vorgesehenen, motorisch angetriebenen Antriebsritzel, welches mit der Zahnstange des Zahnstangenantriebs kämmt.

An einer von einer Bedienerseite 12 des Maschinenbetts 8 abliegenden Rückseite 13 des Maschinenbetts 8 ist in dem Beladebereich 3 der Laserbearbeitungsmaschine 1 eine motorische Beladevorrichtung 14 aufgestellt. Als Beladevorrichtung 14 kommt beispielsweise eine Beladevorrichtung in Frage, wie sie von der Firma TRUMPF unter der Bezeichnung "LoadMaster Tube" vertrieben wird.

In bekannter Weise besitzt die Beladevorrichtung 14 ein Werkstückmagazin, in welchem eine größere Anzahl von zu bearbeitenden Werkstücken vorgehalten werden kann. Die Werkstücke in dem Werkstückmagazin verlaufen mit ihrer Längsrichtung parallel zu dem Maschinenbett 8. Nach der Vereinzelung eines der in dem Werkstückmagazin vorgehaltenen Werkstück wird dieses Werkstück in bekannter Weise mittels einer Transfervorrichtung an das Maschinenbett 8 übergeben und dabei auf den zu diesem Zeitpunkt ausgefahrenen Werkstückunterstützungen 10 abgelegt. Vor der Übergabe an die Werkstückunterstützungen 10 passiert das Werkstück einen nicht gezeigten optischen Detektor. Mittels des optischen Detektors, dessen Detektionsrichtung parallel zu dem Maschinenbett 8 verläuft, wird überprüft, ob das zur Übergabe an das Maschinenbett 8 vorgesehene Werkstück tatsächlich diejenige Querschnittsgeometrie aufweist, zu deren Bearbeitung die in dem Arbeitsraum 6 angeordnete Laserbearbeitungsvorrichtung zu dem betreffenden Zeitpunkt eingerichtet ist.

Ein Pfeil 16 symbolisiert die Richtung der mittels der Beladevorrichtung 14 automatisiert ausgeführten Beladebewegung, mit welcher ein zu bearbeitendes Werkstück an das Maschinenbett 8 beziehungsweise an die ausgefahrenen Werkzeugunterstützungen 10 übergeben wird.

Alternativ kann das Maschinenbett 8 manuell von der Bedienerseite 12 her mit einem zu bearbeitenden Werkstück beladen werden. Die Richtung der manuellen Beladebewegung, die gleichfalls in Werkstückquerrichtung verläuft ist durch einen Pfeil 17 angedeutet.

Das an das Maschinenbett 8 übergebene und von den ausgefahrenen Werkstückunterstützungen 10 unterfangene Werkstück wird in bekannter Weise an seinem von dem Arbeitsraum 6 abliegenden Längsende durch das Spannfutter der Vorschubeinheit 11 geklemmt. Anschließend wird das Werkstück mittels der Vorschubeinheit 11 aus seiner Ausgangsposition in einer Werkstück-Zuführrichtung 18 bewegt und dabei durch die Einlassöffnung der Einhausung 5 mit dem in der Bewegungsrichtung voreilenden Längsende in den Arbeitsraum 6 der Laserbearbeitungsmaschine 1 eingeführt. In dem Arbeitsraum 6 wird das Werkstück mittels der dort angeordneten Laserbearbeitungsvorrichtung trennend bearbeitet. Es sind Bearbeitungsfälle denkbar, in denen das Werkstück während des Bearbeitungsprozesses mittels der Vorschubeinheit 11 bewegt wird. Etwa zum Ausschneiden von Konturen an der Wand eines Werkstücks verfährt die Vorschubeinheit 11 während des Schneidprozesses in der Werkstück-Zuführrichtung 18 und in Gegenrichtung. Gleichzeitig wird das Rohr mittels des Spannfutters der Vorschubeinheit 11 um die Rohrachse gedreht.

In dem dargestellten Beispielsfall wird das Werkstück mittels der Laserschneidvorrichtung im Innern des Arbeitsraums 6 in kleinere Werkstücke zerlegt, die nach dem jeweiligen Trennprozess durch die Auslassöffnung der Einhausung 5 in Werkstücklängsrichtung aus dem Arbeitsraum 6 in einer Ausschleusrichtung 19 in den Entladebereich 4 der Laserbearbeitungsmaschine 1 ausgeschleust.

Der Entladebereich 4 der Laserbearbeitungsmaschine 1 ist in diesem Ausführungsbeispiel mit einer Strahlschutzhaube 20 abgedeckt, die mehrteilig ausgebildet sein kann und sich bis hin zum Arbeitsraum erstreckt. Die Strahlschutzhaube 20 schirmt die Auslassöffnung der Einhausung 5 gegen den Austritt von Laserstrahlung aus dem Arbeitsraum 6 in die für Personen zugängliche Umgebung der Laserbearbeitungsmaschine 1 ab.

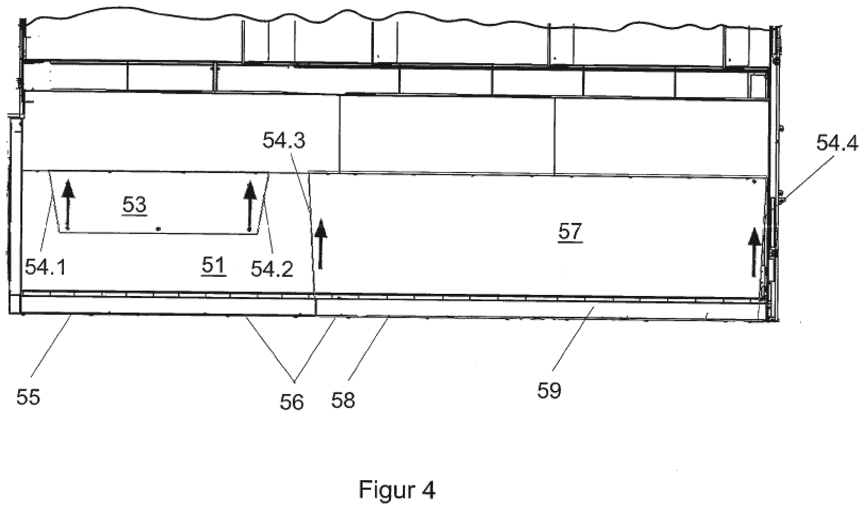

In Figur 2 ist ein Ausführungsbeispiel einer Ausschleusstation 40 einer erfindungsgemäßen Laserbearbeitungsmaschine 1 mit einem gegenüber der Figur 1 abgewandelten Entladebereich 4 gezeigt. Der Entladebereich 4 weist eine Ausschleusstation 40 mit einer weiteren Einhausung 41, einer Ausschleusschräge 42, einem Teilebehälter und einer Teileablage 50 auf. Die Teileablage 50 ist besser zu erkennen in der Figur 4, die eine Draufsicht auf die Teileablage 50 zeigt.

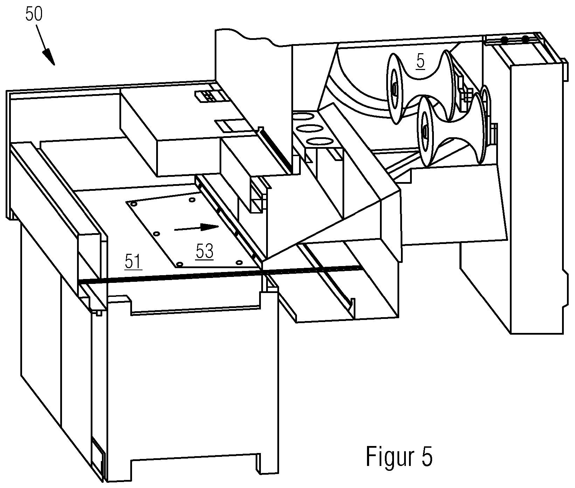

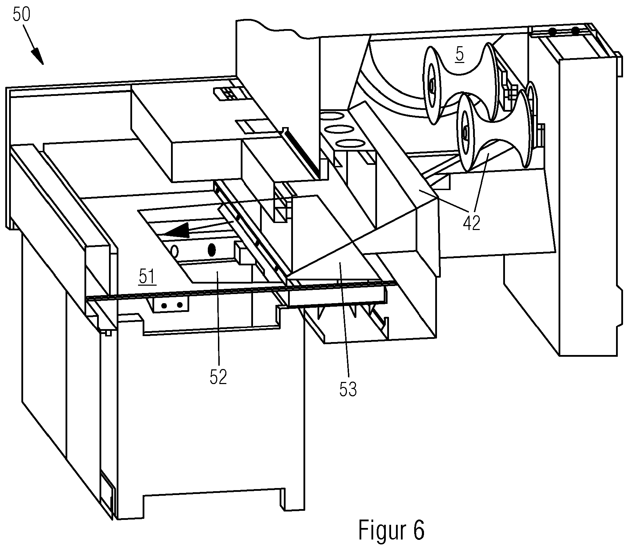

Ausweislich der Figur 2 werden die bearbeiteten Werkstücke in der Ausschleusstation 40 mittels der Ausschleusschräge 42 zu der Teileablage 50 befördert. Die Teileablage 50 weist eine Teileablagefläche 51 auf. Die Teileablagefläche 51 weist wiederum eine Teileöffnung 52 (siehe Figur 6) mit einem Verschlusselement in Form eines Schieber 53 auf. Anstelle eines Schiebers 53 kann das Verschlusselement auch beliebig anders ausgebildet sein, insbesondere als Klappe. Die Funktionalität von der Teileöffnung 52 und dem Schieber 53 wird später mit Bezug auf die Figuren 5 und 6 erläutert.

In die Teileablagefläche 51 ist ein Kurzteilabschnitt 55 integriert. Die Teileablage 50 kann über die komplette Länge zum Ausschleusen langer Werkstücke verwendet werden.

Die Teileablage 50 weist ferner einen Langteilabschnitt 56 mit einer zusätzlichen Teileablagefläche 57 auf. Vorliegend ist ein Teil des Langteilabschnitts 56 als, insbesondere manuell, in Ausschleusrichtung 19 ein- und ausfahrbare Teileschublade 58 ausgebildet. Die Teileschublade 58 weist einen in Ausschleusrichtung 19 angeordneten Teileanschlag 59 auf, der von der zusätzlichen Teileablagefläche 57 absteht.

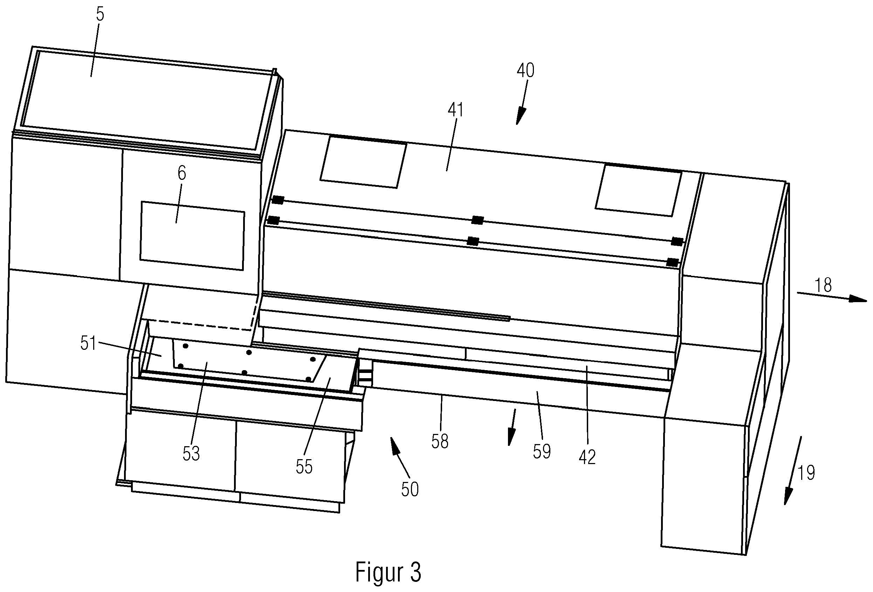

In Figur 2 ist die Teileschublade 58 in einem in die Richtung des in Figur 3 gezeigten Pfeiles, also in Ausschleusrichtung 19, ausgefahrenen Zustand gezeigt. In diesem ausgefahrenen Zustand werden die Teileablagefläche 51 und die zusätzliche Teileablagefläche 57 als gemeinsame Teileablagefläche zum Ablegen von bearbeiteten Werkstücken auf der Teileablage 50 genutzt. Dadurch können lange bearbeitete Werkstücke über die gesamte Länge der Teileablage 50 bestehend aus der Länge der Teileablagefläche 51 und der zusätzlichen Teileablagefläche 57 in Werkstück-Zuführrichtung 18 ausgeschleust werden. Diese können anschließend aus der Teileablage 50 einfach entnommen werden.

In Figur 3 ist die Teileschublade 58 in einem in die Richtung des in Figur 2 gezeigten Pfeiles, also entgegen der Ausschleusrichtung 19, eingefahrenen Zustand gezeigt. Gegenüber der Figur 2 ist keine strahlsichere Entladung von Werkstücken mehr möglich. Allerdings ist ein einfacher Zugang zu der Ausschleusstation 40 und der Teileablagefläche 51 gegeben, um so beispielsweise eine Wartung, Umrüstung oder Reinigung an der Ausschleusstation 40 durchzuführen.

In Figur 4 ist in der Draufsicht der Teileablage 50 der Schieber 53 zu erkennen, der in dieser Anordnung die Teileöffnung 52 (siehe Figur 6) flächenbündig verschließt. Zu erkennen ist ferner, dass der Schieber 53, die Teileöffnung 52 und die Teileschublade 58 trapezförmig ausgebildet sind. Die Kanten 54.1, 54.2, 54.3, 54.4 von Schieber 53, Teileöffnung 52 und Teileschublade 58 mit der zusätzlichen Teileablagefläche 57 verlaufen dabei, insbesondere in Verfahrrichtung der Teileschublade, aufeinander zu.

In Figur 5 ist in einer Schrägschnittansicht erneut die Anordnung der Teileablage 50 mit verschlossener Teileöffnung 52 gezeigt. In Figur 6 hingegen ist der Schieber 53 in Richtung des in Figur 5 gezeigten Pfeiles, also entgegen der Ausschleusrichtung 19, verschoben worden, um die Teileöffnung 52 zu öffnen. Um die Teileöffnung 52 erneut zu verschließen, kann der Schieber 53 in Richtung des in Figur 6 gezeigten Pfeiles, also in Ausschleusrichtung 19verschoben werden.

Bei geöffneter Teileöffnung 52 können kurze bearbeitete Werkstücke durch die Teileöffnung 52 in den Teilebehälter auf einfache und schnelle Art und Weise ausgeschleust werden.

## Patentansprüche

1. Laserbearbeitungsmaschine (1) zum Bearbeiten von Werkstücken (7), wobei die Laserbearbeitungsmaschine (1) aufweist:
- einen Arbeitsraum (6) mit einer darin angeordneten Laserbearbeitungsvorrichtung zum Bearbeiten von Werkstücken (7) in dem Arbeitsraum (6),
- einen Entladebereich (4) mit einer mit dem Arbeitsraum (6) verbundenen Ausschleusstation (40) zum Entladen von in dem Arbeitsraum (6) bearbeiteten Werkstücken, wobei die Ausschleusstation (40) eine Teileablage (50) aufweist, wobei die Teileablage (50) eine Teileablagefläche (51) mit einer Teileöffnung (52) für die bearbeiteten Werkstücke und ein Verschlusselement (53) aufweist, wobei das Verschlusselement (53) und die Teileöffnung (52) dazu eingerichtet sind, dass die Teileöffnung (52) mittels des Verschlusselements (53) verschlossen und geöffnet wird und dass durch die geöffnete Teileöffnung (52) Werkstücke ausschleusbar sind,
**dadurch gekennzeichnet, dass**
die Teileöffnung (52) und das Verschlusselement (53) in einem Kurzteilabschnitt (55) der Teileablage (50) angeordnet sind und die Teileablage (50) einen Langteilabschnitt (56) mit einer zusätzlichen Teileablagefläche (57) aufweist, wobei der Langteilabschnitt (56) den Kurzteilabschnitt (55) aufweist, wobei ein Teil des Langteilabschnitts (56) als eine Teileschublade (58) ausgebildet ist, die in Ausschleusrichtung (19) ein- und ausfahrbar ist.

2. Laserbearbeitungsmaschine (1) nach Anspruch 1, wobei die Ausschleusstation (40) einen Teilebehälter aufweist, der unterhalb der Teileöffnung (52) anordenbar oder angeordnet ist.

3. Laserbearbeitungsmaschine (1) nach Anspruch 1 oder 2, wobei, dass das Verschlusselement (53) als Klappe oder Schieber ausgebildet ist.

4. Laserbearbeitungsmaschine (1) nach einem der voranstehenden Ansprüche, wobei das Verschlusselement (53) dazu eingerichtet ist, die Teileöffnung (52) flächenbündig zu verschließen.

5. Laserbearbeitungsmaschine (1) nach einem der voranstehenden Ansprüche, wobei die Teileöffnung (52) und/oder das Verschlusselement (53) in Ausschleusrichtung (19) zueinander verlaufende Kanten (54) aufweist.

6. Laserbearbeitungsmaschine (1) nach einem der voranstehenden Ansprüche, wobei die Teileöffnung (52) und/oder das Verschlusselement (53) trapezförmig ausgebildet sind.

7. Laserbearbeitungsmaschine (1) nach einem der voranstehenden Ansprüche, wobei die zusätzliche Teileablagefläche (57) im eingefahrenen Zustand der Teileschublade (58) entgegen der Ausschleusrichtung (19) eingefahren ist und die Teileablagefläche (51) und die zusätzliche Teileablagefläche (57) im ausgefahrenen Zustand der Teileschublade (58) eine gemeinsame Teileablagefläche ausbilden.

8. Laserbearbeitungsmaschine (1) nach einem der voranstehenden Ansprüche, wobei die Teileschublade (58) einen in Ausschleusrichtung (19) an einem Ende der zusätzlichen Teileablagefläche (57) angeordneten Teileanschlag (59) aufweist.

9. Laserbearbeitungsmaschine (1) nach einem der voranstehenden Ansprüche, wobei die Teileschublade (58) in Ausschleusrichtung (19) zueinander verlaufende Kanten (54) aufweist.

10. Laserbearbeitungsmaschine (1) nach einem der voranstehenden Ansprüche, wobei die Teileschublade (58) und/oder die zusätzliche Teileablagefläche (57) trapezförmig ausgebildet ist.

11. Laserbearbeitungsmaschine (1) nach einem der voranstehenden Ansprüche, wobei die zusätzliche Teileablagefläche (57) in Werkstück-Zuführrichtung (18) länger oder kürzer als die Teileablagefläche (51) ist.

## Claims

1. A laser processing machine (1) for processing workpieces (7), wherein the laser processing machine (1) has:
- a working space (6) with a laser processing device arranged therein for processing workpieces (7) in the working space (6),
- a discharge area (4) with an ejection station (40) connected to the working space (6) for discharging workpieces processed in the working space (6), wherein the ejection station (40) has a parts tray (50), wherein the parts tray (50) has a parts tray surface (51) with a parts opening (52) for the processed workpieces and a closure element (53), wherein the closure element (53) and the parts opening (52) are designed to close and open the parts opening (52) by means of the closure element (53) and that workpieces can be discharged through the opened parts opening (52),
**characterized in that**
the parts opening (52) and the closure element (53) are arranged in a short partial section (55) of the parts tray (50), and the parts tray (50) has a long partial section (56) with an additional parts tray surface (57), wherein the long partial section (56) has the short partial section (55), wherein a part of the long partial section (56) is designed as a parts drawer (58) which can be moved in and out in the discharge direction (19).

2. The laser processing machine (1) according to claim 1, wherein the ejection station (40) has a parts container that can be arranged or is arranged below the parts opening (52).

3. The laser processing machine (1) according to claim 1 or 2, wherein the closure element (53) is designed as a flap or slide.

4. The laser processing machine (1) according to one of the preceding claims, wherein the closure element (53) is designed to close the parts opening (52) flush with the surface.

5. The laser processing machine (1) according to one of the preceding claims, wherein the parts opening (52) and/or the closure element (53) has edges (54) that run towards each other in the discharge direction (19).

6. The laser processing machine (1) according to one of the preceding claims, wherein the parts opening (52) and/or the closure element (53) are designed in a trapezoidal shape.

7. The laser processing machine (1) according to one of the preceding claims, wherein the additional parts tray surface (57) is retracted in the retracted state of the parts drawer (58) against the discharge direction (19), and the parts tray surface (51) and the additional parts tray surface (57) form a common parts tray surface in the extended state of the parts drawer (58).

8. The laser processing machine (1) according to one of the preceding claims, wherein the parts drawer (58) has a parts stop (59) arranged in the discharge direction (19) at one end of the additional parts tray surface (57).

9. The laser processing machine (1) according to one of the preceding claims, wherein the parts drawer (58) has edges (54) that run towards each other in the discharge direction (19).

10. The laser processing machine (1) according to one of the preceding claims, wherein the parts drawer (58) and/or the additional parts tray surface (57) are designed in a trapezoidal shape.

11. The laser processing machine (1) according to one of the preceding claims, wherein the additional parts tray surface (57) is longer or shorter than the parts tray surface (51) in the workpiece feed direction (18).

## Revendications

1. Machine d'usinage au laser (1) pour l'usinage de pièces (7), dans laquelle la machine d'usinage au laser (1) présente :
- un espace de travail (6) avec un dispositif d'usinage au laser disposé dans celui-ci pour l'usinage de pièces (7) dans l'espace de travail (6),
- une zone de déchargement (4) avec une station d'évacuation (40) reliée à l'espace de travail (6) pour le déchargement de pièces usinées dans l'espace de travail (6), dans laquelle la station d'évacuation (40) présente un support de pièces (50), dans laquelle le support de pièces (50) présente une surface de support de pièces (51) avec une ouverture de pièces (52) pour les pièces usinées et un élément de fermeture (53), dans laquelle l'élément de fermeture (53) et l'ouverture de pièces (52) sont conçus de sorte que l'ouverture de pièces (52) soit fermée et ouverte au moyen de l'élément de fermeture (53) et que des pièces soient évacuées à travers l'ouverture de pièces (52) ouverte,
**caractérisée en ce que**
l'ouverture de pièces (52) et l'élément de fermeture (53) sont disposés dans une section courte (55) du support de pièces (50) et le support de pièces (50) présente une section longue (56) avec une surface de support de pièces supplémentaire (57), dans laquelle la section longue (56) présente la section courte (55), dans laquelle une partie de la section longue (56) est conçue comme un tiroir de pièces (58), qui peut être rentré et sorti dans la direction d'évacuation (19).

2. Machine d'usinage au laser (1) selon la revendication 1, dans laquelle la station d'évacuation (40) présente un bac à pièces qui peut être disposé ou est disposé sous l'ouverture de pièces (52).

3. Machine d'usinage au laser (1) selon la revendication 1 ou 2, dans laquelle l'élément de fermeture (53) est conçu comme un volet ou un coulisseau.

4. Machine d'usinage au laser (1) selon l'une quelconque des revendications précédentes, dans laquelle l'élément de fermeture (53) est conçu pour fermer l'ouverture de pièces (52) à fleur de surface.

5. Machine d'usinage au laser (1) selon l'une quelconque des revendications précédentes, dans laquelle l'ouverture de pièces (52) et/ou l'élément de fermeture (53) présentent des bords (54) s'étendant l'un par rapport à l'autre dans la direction d'évacuation (19).

6. Machine d'usinage au laser (1) selon l'une quelconque des revendications précédentes, dans laquelle l'ouverture de pièces (52) et/ou l'élément de fermeture (53) sont conçus en forme de trapèze.

7. Machine d'usinage au laser (1) selon l'une quelconque des revendications précédentes, dans laquelle la surface de support de pièces supplémentaire (57) est, dans l'état rentré du tiroir de pièces (58), rentrée à l'encontre de la direction d'évacuation (19), et la surface de support de pièces (51) et la surface de support de pièces supplémentaire (57) forment, dans l'état sorti du tiroir de pièces (58), une surface de support de pièces commune.

8. Machine d'usinage au laser (1) selon l'une quelconque des revendications précédentes, dans laquelle le tiroir de pièces (58) présente une butée de pièces (59) disposée dans la direction d'évacuation (19) à une extrémité de la surface de support de pièces supplémentaire (57).

9. Machine d'usinage au laser (1) selon l'une quelconque des revendications précédentes, dans laquelle le tiroir de pièces (58) présente des bords (54) s'étendant l'un par rapport à l'autre dans la direction d'évacuation (19).

10. Machine d'usinage au laser (1) selon l'une quelconque des revendications précédentes, dans laquelle le tiroir de pièces (58) et/ou la surface de support de pièces supplémentaire (57) sont conçus en forme de trapèze.

11. Machine d'usinage au laser (1) selon l'une quelconque des revendications précédentes, dans laquelle la surface de support de pièces supplémentaire (57) est plus longue ou plus courte que la surface de support de pièces (51) dans la direction d'alimentation (18) des pièces.
